# EUROPÄISCHE PATENTANMELDUNG

(11) **EP 4 765 693 A1**
(43) Veröffentlichungstag der Anmeldung: **24.06.2026**
(21) Anmeldenummer: 24221435.1
(22) Anmeldetag: 19.12.2024
(51) Int. Cl.: H04L 1/00

(54) **VERFAHREN UND VORRICHTUNG ZUR DATENÜBERTRAGUNG MIT GEMEINSAMER REDUNDANZ FÜR EINE VARIABLE ANZAHL VON DATENBLÖCKEN**

(71) Anmelder: Siemens Aktiengesellschaft, 80333 München (DE)
(72) Erfinder: Muhr, Hannes, 2463 Gallbrunn (AT); Jänicke, Peter, 90765 Fürth (DE); Krätz, Hans-Peter, 91056 Erlangen (DE)
(74) Vertreter: Siemens Patent Attorneys

(57) **Zusammenfassung**

Verfahren zur Datenübertragung von Nutz-Daten (D) von einem Sender zu einem Empfänger, wobei die Datenübertragung der Nutz-Daten (D) mithilfe von Sende-Daten mit KontrollInformationen und zumindest einem Datenblock (D1-D12) erfolgt, wobei der zumindest eine Datenblock (D1-D12) eine definierbare, variable Sende-Länge aufweist, und die KontrollInformationen dazu geeignet sind, die Datenübertragung auf Basis einer Codierung mit Vorwärts-Fehlerkorrektur auszuführen.

## Beschreibung

Die Erfindung betriff ein Verfahren und eine Vorrichtung zur Datenübertragung von Nutz-Daten von einem Sender zu einem Empfänger.

Serielle Punkt-zu-Punkt Kommunikationsstrecken mit hohen Daten-Übertragungsgeschwindigkeiten sind für echtzeitfähige industrielle Anwendungen im Stand der Technik bereits bekannt, welche etwa Steuereinheiten, Sensoren und Aktuatoren verbinden.

Spezielle Ausführungen davon benötigen meist eine galvanische Trennung, beispielsweise auch zum Schutz vor Hochspannung, wobei dafür vorgesehene elektrische Vorkehrungen in der Regel die Störfestigkeit dieser Kommunikationsstrecken unerwünscht mindern.

So können beispielsweise elektrostatische Entladungen Fehler im Datenstrom hervorrufen, die sich in der Regel als Bündel-Bitfehler äußern.

Im Stand der Technik ist es bekannt, mithilfe von entsprechenden Sicherungsmechanismen, wie durch Redundanzinformation, beispielsweise zyklische Redundanz-Korrektur CRC, Paritätsbits, etc., zu erkennen, ob Fehler aufgetreten sind und veranlassen eine Wiederholung beim Sender, was die Echtzeiteigenschaften oft unerwünscht empfindlich verschlechtert.

Um dem entgegenzuwirken, werden bereits vorwärts-fehlerkorrigierende Codes (kurz FEC) eingesetzt, deren Redundanz auch eine gleichzeitige Korrektur der fehlerhaften Datenbits ermöglicht.

Auch hier ist die Latenz - wenn auch in geringerem Maße - ungünstig beeinflusst, weil die Redundanzinformation über eine fixe Anzahl von Datenbits oder Blöcken gebildet wird und diese erst ausgewertet werden muss, bevor eine Korrektur der Datenbits erfolgen kann.

Demzufolge haben kürzere Blocklängen weniger Latenz. Gleichzeitig reduzieren aber kürzere Blocklängen die Bandbreite, weil einer festen Redundanzlänge und dementsprechenden Korrektureigenschaften weniger Nutzdaten gegenüberstehen.

Initial wurde Vorwärts-Fehlerkorrektur vornehmlich in Funk- und Satellitenkommunikation eingesetzt, wo Latenzen eine untergeordnete Rolle spielen und auf Bandbreite und Korrektureigenschaften hin optimiert wurde.

Der bekannte 10G Ethernet Standard IEEE802.3ap spezifiziert die FEC-Eigenschaften für diese Technologie.

Für industrielle Echtzeitkommunikation sind die darin definierten Blocklängen, beispielsweise 2120 Bits, in der Regel nicht tragbar, weil sie zu große Latenz bedeuten.

Es ist daher Aufgabe der Erfindung ein Daten-Übertragungsverfahren bereitzustellen, welches für eine industrielle serielle Kommunikation zwischen Endgeräten verbesserte Übertragungseigenschaften hinsichtlich Bandbreite, Latenz, Fehlererkennung und Fehlerkorrektur bereitstellt.

Die erfindungsgemäße Aufgabe wird durch ein Verfahren zur Datenübertragung von Nutz-Daten von einem Sender zu einem Empfänger gelöst, wobei die Datenübertragung der Nutz-Daten mithilfe von Sende-Daten mit Kontroll-Informationen und zumindest einem Datenblock erfolgt, wobei der zumindest eine Datenblock eine definierbare, variable Sende-Länge aufweist, und die Kontroll-Informationen dazu geeignet sind, die Datenübertragung auf Basis einer Codierung mit Vorwärts-Fehlerkorrektur auszuführen.

Die Möglichkeit, die Sende-Länge bei der Datenübertragung individuell einzustellen, erlaubt eine variable Block-Größe bei der Datenübertragung von jeweiligen Daten-Blöcken, welche zusammen die Nutz-Daten bilden.

Mit anderen Worten ist die Sende-Länge variabel über eine Anzahl von Daten-Blöcken, wobei die Daten-Blöcke aus mehreren verschiedenen Nutz-Daten gebildet sein können.

Bei der Übertragung zweier aufeinander folgender Nutz-Daten in deren jeweiligen Sende-Daten können auch Daten-Blöcke verwendet werden, welche innerhalb der Sende-Daten Block-Größen mit derselben Sende-Länge, jedoch für die jeweiligen Nutz-Daten Block-Größen mit unterschiedlicher Sende-Länge aufweisen.

Durch die Erfindung wird eine flexibel einstellbare Blocklänge eine optimale Anpassung zwischen Latenz und Bandbreite erreicht.

In der industriellen Kommunikation hat häufig jeder zusätzliche Takt an Verzögerung für die Echtzeiteigenschaften negative Auswirkungen.

Bei der Entwicklung von elektronischen Schaltkreisen ist die Zielanwendung nicht immer bekannt, und die Zielanwendung gibt meist erst die Konfiguration der Datenübertragungs-Parameter vor, wodurch eine parametrisierbare Lösung vorteilhaft ist.

Es ist vorgesehen, dass die Datenübertragung auf Basis einer Codierung mit Vorwärts-Fehlerkorrektur ausgeführt wird.

Dadurch kann die Erfindung auf besonders einfache Weise für eine unidirektionale Datenübertragung angewendet werden.

Es ist auch vorgesehen, dass die Sende-Daten Kontroll-Informationen umfassen, wie beispielsweise Paritäts-Informationen oder zyklische Redundanz-Prüfungs-Informationen.

Dadurch kann die Erfindung auf besonders einfache Weise für eine sichere Datenübertragung angewendet werden, bei welcher Übertragungs-Fehler erkannt werden können.

Es ist günstig, wenn die Datenübertragung der Nutz-Daten mithilfe von Sende-Daten mit Kontroll-Informationen und zumindest einem Datenblock erfolgt, bevorzugt mit mehreren Datenblöcken, wie beispielsweise drei, fünf, zehn, hundert oder noch mehr Datenblöcken.

In einer Weiterbildung der Erfindung ist es vorgesehen, dass die Sende-Länge vordefiniert ist und der Datenübertragung als Parameter zur Festlegung der Sende-Länge bereitstellt.

Dadurch kann die Erfindung auf besonders einfache Weise realisiert werden.

In einer Weiterbildung der Erfindung ist es vorgesehen, dass eine Rechenvorrichtung dazu eingerichtet ist, ein Anwendungsprogramm auszuführen, und das Anwendungsprogramm während der Ausführung die Sende-Länge bestimmt und dementsprechend die Sende-Länge für die Datenübertragung einstellt.

Mit variablen Blocklängen in der Datenübertagung kann ein Datenübertragungs-System individuell für eine Anwendung hinsichtlich Latenz und Bandbreite optimiert werden.

Dabei kann die Konfiguration der Datenübertragungs- Parameter für eine Anwendung beispielswiese statisch erfolgen, oder auch dynamisch, um ein System an den aktuellen oder zukünftigen Betrieb anzupassen.

Die Kommunikationspartner können sich im Fall einer dynamischen Konfiguration die Blocklänge beispielsweise untereinander "aushandeln".

Eine Parametrierung kann beispielsweise bei der System-Entwicklung durch eine entsprechende Konfiguration erfolgen, oder auch dynamisch im Betrieb angepasst werden.

In einer Weiterbildung der Erfindung ist es vorgesehen, dass die Datenübertragung der Sende-Daten seriell erfolgt.

Dadurch kann die Erfindung auf besonders einfache Weise für eine unidirektionale Datenübertragung angewendet werden.

In einer Weiterbildung der Erfindung ist es vorgesehen, dass die Nutz-Daten zumindest eine Nutz-Länge aufweist, welche ein Vielfaches der Sende-Länge beträgt.

Für sehr lange Nutz-Längen oder lange Blöcke, also Blöcke mit einer Länge von mehr als das fünffache, bevorzugt mehr als das zehnfach oder besonders bevorzugt mehr als das zwanzigfache eines Worts, ist es besonders vorteilhaft, wenn ein ganzzahliges Vielfaches der Sende-Länge als Länge gewählt wird, da das Syndrom auf einfache Weise stufenweise reduziert werden kann, was einen reduzierten Aufwand in der Implementierung bedeutet, speziell in einer Hardware-Implementierung.

Die erfindungsgemäße Aufgabe wird durch eine Datenübertragungs-Vorrichtung zur Übertragung von Nutz-Daten von einem Sender zu einem Empfänger gelöst, wobei das Verfahren nach einem der vorhergehenden Ansprüche ausgeführt wird.

In den folgenden Figuren ist ein Ausführungsbeispiel der Erfindung gezeigt, welches die Erfindung näher beschreiben soll. Die Figuren zeigen in
- Fig. 1: Blockschaltbild für ein Datenübertragungssystem nach dem Stand der Technik,
- Fig. 2: ein Ausführungsbeispiel der Erfindung in Form eines Blockschaltbildes,
- Fig. 3: Beispiele für Daten D mit verschiedenen Blocklängen,
- Fig. 4: ein Diagramm für eine FEC mit der Latenz in Abhängigkeit der Daten-Länge,
- Fig. 5: eine erfindungsgemäße Vorrichtung zur Datenübertragung von Nutz-Daten von einem Sender zu einem Empfänger.

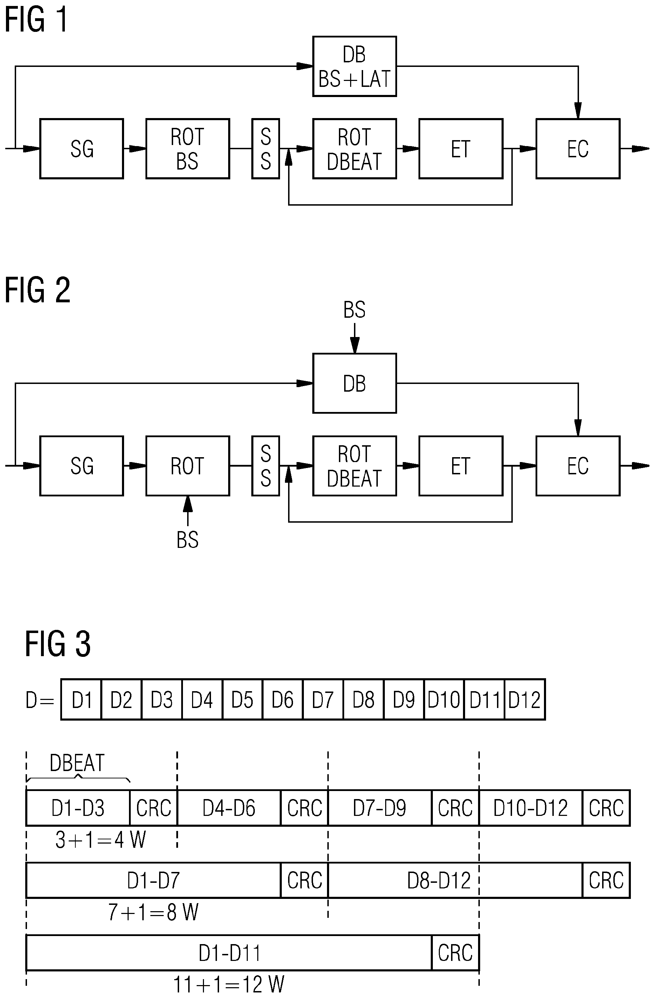

**Fig. 1** zeigt ein Blockschaltbild für ein Datenübertragungssystem nach dem Stand der Technik für eine FEC-Dekodierung gemäß IEEE 802.3ap mit fester Blocklänge.

Eine Vorwärtsfehlerkorrektur (engl. "forward error correction", kurz FEC) ist eine Technik, welche dazu dient, die Fehlerrate bei der Speicherung oder der Übertragung digitaler Daten zu senken, und stellt ein Fehlerkorrekturverfahren dar.

Wenn in einem Übertragungssystem Vorwärtsfehlerkorrektur eingesetzt wird, kodiert der Sender die zu übertragenden Daten in redundanter Weise, so dass der Empfänger Übertragungsfehler ohne Rückfrage beim Sender erkennen und korrigieren kann.

Die Vorwärtsfehlerkorrektur erfolgt im Rahmen der Kanalcodierung und ist ein Teil der Kodierungstheorie.

Dem digitalen und zunächst quellenkodierten Signal wird auf der Senderseite in einem Kanalencoder gezielt Redundanz hinzugefügt, die es dem Kanaldecoder im Empfänger ermöglichen soll, Fehler, die auf dem Übertragungskanal aufgetreten sind, zu korrigieren.

Die Ergänzung der zu übertragenden Daten um eine Prüfsumme ist nicht hinreichend, um Vorwärtsfehlerkorrektur zu ermöglichen.

Sie erlaubt es dem Empfänger lediglich, zu erkennen, dass ein Fehler aufgetreten ist; der Empfänger muss dann den Sender zu erneuter Übertragung des fehlerhaften Datenblocks auffordern.

Ein solches Verfahren wird als "Rückwärtsfehlerkorrektur", "nachgefragte Korrekturübertragung" oder "automatische Wiederholungsanfrage" bezeichnet; es ist in ARQ-Protokollen (engl. "automatic repeat-request") standardisiert und wird z. B. im TCP-Protokoll eingesetzt.

Im Verfahren werden zunächst Nutz-Daten einem Syndrom-Generator SG zugeführt, welcher die Daten zur Erzeugung der FEC vorverarbeitet, mathematische gesehen als Rest einer Polynom-Division.

Ein Syndrom kann beispielsweise eine Prüfsumme einer Prüfsumme sein.

Dann erfolgt eine Rotation ROT unter Anwendung einer festen Block-Größe BS (engl. "block size").

Das Ergebnis wird in einem Register, einem sogenannten "Syndrom-Store" SS, also einer Verteil-Plattform gespeichert.

Es erfolgt eine neuerliche Rotation ROT unter Anwendung eines Daten-Beat DBEAT (engl. "data beat").

Der Daten-Beat DBEAT ist eine Daten-Einheit, welche aus den Nutz-Daten als Teilmenge gebildet werden.

Anschließend erfolgt eine Fehler-Erkennung ET (engl. "error trapping").

Bei einem erkannten Fehler kommt es zu einer Rückmeldung an die vorhergehende Stufe Rotation ROT mit dem Daten-Beat DBEAT.

Die Nutz-Daten werden mithilfe eines Daten-Puffers DB (engl. " data buffer") zwischengespeichert, was einer Latenz LAT entspricht, und der abschließenden Fehler-Korrektur EC (engl. "error correction") zugeführt.

**Fig. 2** zeigt ein Ausführungsbeispiel der Erfindung in Form eines Blockschaltbildes für ein entsprechendes Datenübertragungssystem.

Die Blocklänge BS wird als Laufzeit-Parameter den Blöcken Datenpuffer DB und Rotation ROT bereitgestellt.

Da können die Übertragungseigenschaften, wie Latenz LAT oder Bandbreite einstellbar gestaltet werden und das zu konfigurierende Echtzeit-System für eine Zielanwendung, wie beispielsweise eine Motorsteuerung mit Sensoren und Aktoren, optimiert werden.

Die Blocklänge als beliebigen frei wählbaren Parameter zuzulassen wäre technisch zwar möglich, wegen der Komplexität der Implementierung in Logik oder der zusätzlichen Latenz derselben aber nicht sinnvoll.

Stattdessen ist ein Vielfaches einer Minimal-Blocklänge ideal, weil damit die Rotation als bedeutender Komplexitätstreiber mehrfach sequentiell ausgeführt werden kann.

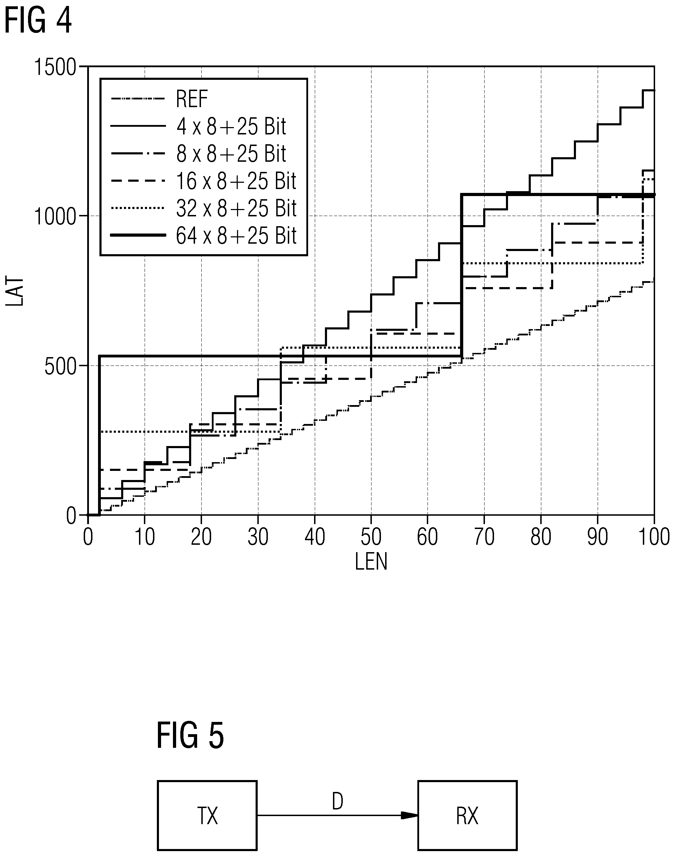

Die Datenübertragung von Nutz-Daten D erfolgt von einem Sender TX zu einem Empfänger RX, wie in der Fig. 5 näher ausgeführt.

Die Datenübertragung der Nutz-Daten D erfolgt dabei mithilfe von Sende-Daten mit zumindest einem Datenblock D1-D12, wobei der zumindest eine Datenblock D1-D12 eine definierbare, variable Sende-Länge aufweist, wie in der Fig. 3 näher ausgeführt.

Die Sende-Länge kann beispielsweise vordefiniert sein und kann der Datenübertragung als Parameter zur Festlegung der Sende-Länge bereitstellt werden.

Alternativ kann eine Rechenvorrichtung vorgesehen sein, welche dazu eingerichtet ist, ein Anwendungsprogramm auszuführen, und das Anwendungsprogramm während der Ausführung die Sende-Länge bestimmt und dementsprechend die Sende-Länge für die Datenübertragung einstellt.

Bei der Datenübertragung können die Sende-Daten ferner Kontroll-Informationen umfassen, wie beispielsweise Paritäts-Informationen oder zyklische Redundanz-Prüfungs-Informationen CRC.

Die Kontroll-Informationen sind optional dazu geeignet, die Datenübertragung auf Basis einer Codierung mit Vorwärts-Fehlerkorrektur auszuführen.

Bevorzugt erfolgt die Datenübertragung der Sende-Daten seriell.

Bevorzugt weisen die Nutz-Daten D zumindest eine Nutz-Länge aufweist, welche ein Vielfaches der Sende-Länge beträgt.

**Fig. 3** stellt ein Beispiel für Blocklängen von Daten D mit Daten-Blöcken D1-D12 (mit einer sog. "Wort"-Länge") und Kontroll-Informationen, wie für eine zyklische Redundanz-Prüfung CRC, dar, welche ein Vielfaches der ursprünglichen Blocklänge betragen.

Die Festlegung auf eine bestimmte Blocklänge für die nachfolgende Kommunikation kann per Konfiguration während der System-Entwicklung erfolgen, oder aber auch dynamisch während des Betriebs an möglicherweise wechselnde Systemanforderungen angepasst werden, beispielsweise mittels eines zu definierenden Protokolls.

Im gezeigten Beispiel hat der erste Datenstrom der Sende-Daten eine Länge des Daten-Beats DBEAT von 3 Einheiten oder Worten, für die Daten D und 1 Wort für die Kontroll-Informationen CRC, also insgesamt eine Sende-Länge von 4 Worten.

Der zweite Datenstrom der Sende-Daten hat eine Länge des Daten-Beats DBEAT von 7 Worten für die Daten D und 1 Wort für die Kontroll-Informationen CRC, also insgesamt eine Sende-Länge von 8 Worten.

Der dritte Datenstrom der Sende-Daten eine Länge des Daten-Beats DBEAT von 11 Worten für die Daten D und 1 Wort für die Kontroll-Informationen CRC, also insgesamt eine Sende-Länge von 12 Worten.

Die Daten-Blöcke D1-D12 können beispielsweise aus mehreren verschiedenen Nutz-Teil-Daten gebildet sein, das heißt mehrere Nutz-Teil-Daten könnend die Nutz-Daten D bilden, und die Nutz-Teil-Daten müssen logisch nicht einem einzigen Daten-Paket zugeordnet sein.

Wenn nun die genannten Nutz-Teil-Daten als separate Nutz-Daten angesehen werden, kann bei der Übertragung zweier aufeinander folgender Nutz-Daten die Block-Größe zwischen diesen separaten Nutz-Daten variiert werden.

Beispielsweise kann der zweite Datenstrom sequentiell auf den ersten Datenstrom folgen, und der dritte Datenstrom sequentiell auf den zweiten Datenstrom.

In deren jeweiligen Sende-Daten können dann auch Daten-Blöcke verwendet werden, welche innerhalb der Sende-Daten Block-Größen mit derselben Sende-Länge, jedoch für die jeweiligen Nutz-Daten Block-Größen mit unterschiedlicher Sende-Länge aufweisen.

**Fig. 4** stellt die Auswirkung einer FEC in Form einer zusätzlichen Latenz LAT in Abhängigkeit einer Daten-Länge LEN dar.

Der Daten-Beat DBEAT definiert einen speziellen Datenrahmen mit der Daten-Länge LEN, welcher beispielsweise aus zwei bereits kodierten Nutz-Bytes und etwas Zusatzinformation zu 20 Bits pro Daten-Beat DBEAT besteht.

Tatsächlich kann die Länge der Daten aber an eine jeweilige Anwendung angepasst werden, und kann daher allgemeiner in Bytes angegeben werden.

Die dargestellte Kurve REF zeigt eine unkodierte "Referenz"-Übertragung, bei welcher jedes Datenbyte bitseriell übertragen wird, was zur kürzest möglichen Latenz führt.

Die dargestellte Kurve "4 x 8 + 25 bit" stellt 4 Bytes mit 25 Bit CRC Overhead dar, was zu einer "Coderate" von 32/(32+25) = 56% führt.

Die dargestellte Kurve "8 x 8 + 25 bit" stellt 8 Bytes mit 25 Bit CRC Overhead dar.

In den Kurven ist jeweils ein treppenförmiger Verlauf erkennbar, wobei diese Stufen mit steigender "Frame"-Länge immer größere Sprünge aufweisen, also "grob-granularer" werden.

Die Wahl der Daten-Länge kann dazu führen, dass beispielsweise über 500 Take Latenz für die Informationsübertragung von einem Byte, verpackt in einem 64 Byte Frame, siehe Kurve "64 x 8 + 25 bit", was zu einer "Coderate" von 512/(512+25) = 95% führt.

Die Wahl der Daten-Länge kann aber auch dazu führen, dass beispielsweise die Nutzinformation etwa 64 Byte beträgt, für die Latenz ein deutlich besseres Ergebnis erzielt werden kann.

**Fig. 5** stellt eine Vorrichtung zur Datenübertragung der Nutz-Daten D von einem Sender TX zu einem Empfänger RX dar.

Die Datenübertragungs-Vorrichtung ist zur Übertragung der Nutz-Daten D von einem Sender TX zu einem Empfänger RX eingerichtet, wobei das erfindungsgemäße Verfahren ausgeführt wird.

*Unabhängig vom grammatikalischen Geschlecht eines bestimmten Begriffes sind Personen mit männlicher, weiblicher oder anderer Geschlechteridentität mit umfasst.*

### Bezugszeichenliste

- BS: Block-Größe (engl. "block size")
- CRC: zyklische Redundanz-Prüfung
- D: Nutz-Daten
- D1-D12: Daten-Block
- DB: Daten-Puffer (engl. " data buffer")
- DBEAT: Daten-Beat (engl. "data beat")
- EC: Fehler-Korrektur (engl. "error correction")
- ET: Fehler-Erkennung (engl. "error trapping")
- LAT: Latenz
- LEN: Daten-Länge
- ROT: Rotation
- RX: Empfänger
- SG: Syndrom-Generator
- SS: Syndrom-Store bzw. Verteil-Plattform
- TX: Sender
- W: Wort

## Patentansprüche

1. Verfahren zur Datenübertragung von Nutz-Daten (D) von einem Sender zu einem Empfänger, wobei die Datenübertragung der Nutz-Daten (D) mithilfe von Sende-Daten mit Kontroll-Informationen und zumindest einem Datenblock (D1-D12) erfolgt, wobei der zumindest eine Datenblock (D1-D12) eine definierbare, variable Sende-Länge aufweist, und die Kontroll-Informationen dazu geeignet sind, die Datenübertragung auf Basis einer Codierung mit Vorwärts-Fehlerkorrektur auszuführen.

2. Verfahren nach dem vorhergehenden Anspruch, wobei die Sende-Länge vordefiniert ist und der Datenübertragung als Parameter zur Festlegung der Sende-Länge bereitstellt.

3. Verfahren nach Anspruch 1, wobei eine Rechenvorrichtung dazu eingerichtet ist, ein Anwendungsprogramm auszuführen, und das Anwendungsprogramm während der Ausführung die Sende-Länge bestimmt und dementsprechend die Sende-Länge für die Datenübertragung einstellt.

4. Verfahren nach einem der vorhergehenden Ansprüche, wobei die Datenübertragung der Sende-Daten seriell erfolgt.

5. Verfahren nach einem der vorhergehenden Ansprüche, wobei die Nutz-Daten (D) zumindest eine Nutz-Länge aufweist, welche ein Vielfaches der Sende-Länge beträgt.

6. Datenübertragungs-Vorrichtung zur Übertragung von Nutz-Daten (D) von einem Sender zu einem Empfänger, wobei das Verfahren nach einem der vorhergehenden Ansprüche ausgeführt wird.
